Europäisches Patentamt

European Patent Office

Office européen des brevets

(11) Numéro de publication: **0 327 772**
**A1**

## (12) DEMANDE DE BREVET EUROPEEN

(21) Numéro de dépôt: 88403260.8

(22) Date de dépôt: 21.12.88

(51) Int. Cl.⁴: **C09J 3/16 , C08F 283/00**

Le titre de l'invention a été modifié (Directives relatives à l'examen pratiqué à l'OEB, A-III, 7.3)

(30) Priorité: 22.12.87 FR 8717906

(43) Date de publication de la demande:
16.08.89 Bulletin 89/33

(84) Etats contractants désignés:
AT BE CH DE ES FR GB GR IT LI LU NL SE

(71) Demandeur: **SOCIETE NATIONALE ELF AQUITAINE**
**Tour Elf 2 Place de la Coupole La Défense 6**
**F-92400 Courbevoie(FR)**

(72) Inventeur: **Truong, Dinh Nguyen**
**10, avenue du Général Leclerc**
**F-64000 Pau(FR)**

(74) Mandataire: **Radmilovitch, Serge**
**Société Nationale Elf Aquitaine Division**
**Propriété Industrielle Tour Elf**
**F-92078 Paris La Défense - Cedex 45(FR)**

(54) **Formulation adhésive acrylique fournissant un joint adhésif durci.**

(57) Formulation adhésive acrylique du type comportant une phase acrylique monomère et, en mélange intime avec cette dernière, un système générateur de radicaux libres, un adjuvant améliorant la résistance au choc de la formulation adhésive durcie, une résine époxyde et éventuellement d'autres additifs.

Ledit adjuvant consiste en un réseau polyuréthanne réticulé formé in situ au sein de la phase monomère à partir d'un système précurseur de polyuréthanne mis en solution dans ladite phase et la formulation adhésive renferme également un durcisseur latent pour la résine époxyde, les pourcentages pondéraux x de la phase monomère, y du système précurseur de polyuréthanne et z de résine époxyde étant tels que $15 \leq x \leq 94,9$, $0,1 \leq y \leq 60$ et $5 \leq z \leq 90$ avec $x + y + z = 100\%$.

Cette formulation adhésive, qui présente après durcissement une tenue thermique ainsi que des résistances au choc et au cisaillement améliorées, est utilisable, entre autres, pour la réalisation de collages structuraux.

EP 0 327 772 A1

# Formulation adhésive acrylique fournissant un joint adhésif durci présentant une tenue thermique et des résistances au choc et au cisaillement améliorées et son application à la liaison d'éléments et notamment d'éléments structuraux.

L'invention a trait à une formulation adhésive acrylique susceptible de fournir un joint adhésif durci présentant une tenue thermique et des résistances au choc et au cisaillement améliorées. Elle se rapporte encore à l'application d'une telle formulation à la liaison d'éléments et notamment d'éléments structuraux.

Dans divers domaines de l'industrie, des éléments structuraux en matériaux tels que métaux, matières plastiques, matériaux composites ou autres sont assemblés par collage en faisant appel à des formulations adhésives particulières appelées adhésifs structuraux.

De telles formulations adhésives consistent généralement en une solution d'un polymère à propriétés élastomériques dans une phase liquide à base d'un ou plusieurs monomères acryliques, ladite solution renfermant également un système susceptible de générer des radicaux libres.

Le polymère à propriétés élastomériques est présent dans la formulation adhésive soit en solution vraie soit le plus souvent en pseudo-solution, c'est-à-dire sous la forme de particules très finement divisées dans la phase liquide monomère conduisant à une solution du type solution colloidale, et il constitue dans l'adhésif durci une phase dissipatrice d'énergie, qui confère audit adhésif des propriétés améliorées de résistance au choc.

De nombreux polymères caoutchoutiques ont déjà été proposés pour constituer les polymères à propriétés élastomériques présents dans les formulations du type précité, parmi lesquels figurent en bonne place les caoutchoucs polyuréthannes, qui sont des polyuréthannes non réactifs de hautes masses moléculaires possédant une nature élastomérique et ayant des chaînes sensiblement linéaires.

Les formulations adhésives susmentionnées, pour lesquelles le polymère à propriétés élastomériques qu'elles renferment en solution ou pseudo-solution est un caoutchouc polyuréthanne, ont des performances intéressantes aux températures pas trop élevées, généralement aux températures inférieures à 150°C et conduisent notamment à une bonne résistance au choc de l'adhésif durci.

Par contre aux températures supérieures à 150°C la tenue thermique des joints adhésifs durcis obtenus à partir de telles formulations adhésives et par là-même leurs caractéristiques mécaniques chutent fortement et pour remédier à cet inconvénient on a proposé d'incorporer de 2 à 20 % en poids de la formulation, d'une résine époxyde qui ne réagit pas avec les divers ingrédients qu'elles renferment.

Les formulations adhésives ainsi obtenues, renfermant un caoutchouc de polyuréthanne et une résine époxyde non réactifs, ont certes une bonne résistance au choc et un meilleur comportement aux températures supérieures à 150°C que les formulations adhésives correspondantes exemptes de résine époxyde, mais elles fournissent des joints adhésifs durcis qui ne possèdent pas une résistance satisfaisante au cisaillement, lorsque les contraintes de cisaillement sont importantes, notamment en raison de la nature même des additifs polymères, qui sont généralement des polymères linéaires, et de l'apparition de zones de séparation de phase entre les polymères souvent incompatibles formant le joint adhésif, lesdites zones constituant des zones de fluage et de fragilisation du joint adhésif. De plus l'amélioration du comportement thermique desdites formulations, due à la présence de la résine époxyde non réactive, reste faible et en outre les joints adhésifs durcis manquent de cohésion aux températures supérieures à 150°C surtout quand leur épaisseur augmente.

On a trouvé que l'on pouvait remédier à ces inconvénients en remplaçant le caoutchouc polyuréthanne de la formulation adhésive acrylique par un réseau polyuréthanne réticulé formé in situ au sein des monomères acryliques par addition à ces derniers d'un système précurseur de polyuréthanne et en incorporant également à la formulation adhésive un durcisseur latent pour la résine époxyde. Ceci conduit au cours du durcissement de l'adhésif à la création d'un réseau polyuréthanne réticulé ainsi que d'un réseau polyépoxyde réticulé à l'intérieur du réseau formé par les chaînes polymères résultant de la polymérisation du ou des monomères acryliques, avec comme résultat l'obtention d'un adhésif durci présentant une structure de réseaux polymères interpénétrés et possédant de ce fait une tenue thermique et une résistance au cisaillement fortement améliorées en plus d'une excellente résistance au choc.

L'invention a donc pour objet une formulation adhésive acrylique présentant après durcissement une tenue thermique ainsi que des résistances au choc et au cisaillement substantiellement améliorées, ladite formulation étant du type comportant une phase monomère, qui renferme un ou plusieurs monomères monoacryliques et peut inclure jusqu'à 10%, en poids de ladite phase, d'un ou plusieurs esters pluriacryliques, un système générateur de radicaux libres ainsi qu'un adjuvant d'amélioration de la résistance au choc de la formulation adhésive durcie et une résine époxyde, et se caractérisant en ce que ledit adjuvant consiste en un réseau polyuréthanne réticulé formé in situ au sein de la phase acrylique monomère à partir d'un système précurseur de polyuréthanne mis en solution dans au moins une partie de ladite phase monomère, ledit système précurseur étant constitué d'un ou plusieurs isocyanates organiques polyfonctionnels et d'un ou plusieurs polyols, qui sont solubles chacun dansla phase acrylique monomère et sont choisis de telle sorte que ce système précurseur renferme au moins un isocyanate possédant au moins trois fonction isocyanates ou/et un polyol ayant au moins trois fonctions hydroxyles pour conduire au polyuréthanne réticulé sans séparation de phases, en ce que, la formulation renferme en outre un durcisseur latent pour la résine époxyde et en ce que les pourcentages pondéraux x de la phase monomère, y du système précurseur de polyuréthanne et z de résine époxyde dans l'ensemble de ces trois composantes de la formulation sont tels que $15 \leq x \leq 94,9$, $0,1 \leq y \leq 60$ et $5 \leq z \leq 90$ avec $x + y + z = 100\%$.

De préférence les valeurs x, y et z sont choisies de telle sorte que $30 \leq x \leq 89$, $1 \leq y \leq 30$ et $10 \leq z \leq 70$ avec $x + y + z = 100\%$.

On peut former le système précurseur de polyuréthanne en associant un ou plusieurs isocyanates organiques consistant en partie ou en totalité en un ou plusieurs isocyanates renfermant au moins trois fonctions isocyanates à un ou plusieurs diols ou à un mélange d'un ou plusieurs diols et d'un ou plusieurs polyols renfermant au moins trois fonctions hydroxyles, la quantité du ou desdits polyols au moins trifonctionnels représentant au plus 60% et de préférence entre 0,5 et 15% du poids global du ou des diols du mélange.

On peut encore former le système précurseur de polyuréthanne en associant un ou plusieurs diisocyanates à un mélange d'un ou plusieurs diols et d'un ou plusieurs polyols renfermant au moins trois fonctions hydroxyles, la quantité globale du ou desdits polyols au moins trifonctionnels représentant au plus 60% et de préférence entre 0,5 et 15% du poids global du ou des diols du mélange.

Le ou les polyols entrant dans la composition du système précurseur de polyuréthanne sont des composés organiques qui renferment au moins deux groupements hydroxyles dans leurs molécules et ont une masse moléculaire moyenne en nombre comprise entre 60 et 200 000. Lesdits polyols peuvent être notamment des polyétherpolyols résultant de la réaction d'un ou plusieurs polyols de faible masse moléculaire, par exemple éthylène glycol, propylène glycol, butylène glycol, pentylène glycol, hexylène glycol, glycérol, triméthylolpropane, triméthyloléthane, pentaerythritol, dipentaerythritol, méthylglycoside, sorbitol et saccharose avec un ou plusieurs composés époxydes du type oxyde de propylène, oxyde d'éthylène ou encore des polyesterpolyols résultant de la réaction d'un ou plusieurs polyols micromoléculaires du type précité avec un ou plusieurs acides polycarboxyliques tels que les acides oxalique, malonique, succinique, glutarique, adipique, pimélique, subérique, azélaique, sébacique, malique, phtaliques, cyclohexanedicarboxyliques,endométhylènetétrahydrophtaliques ou les anhydrides de tels acides. Peuvent être également utilisés des polyols azotés ou soufrés et notamment des polyesteramides ou polyétheresteramides hydroxylés en bouts de chaînes ou encore des alcoylènediamines ou des polyalcoylènepolyamines dont les atomes d'hydrogène fixés aux atomes d'azote sont remplacés par des restes hydroxyalcoyles comme, par exemple, hydroxyéthyles ou hydroxypropyles.

Conviennent tout spécialement à titre de polyols, les polyétherdiols choisis parmi les polyoxyalcoylèneglycols tels que polyoxyéthylèneglycols, polyoxypropylèneglycols, polyoxytétraméthylèneglycols, polyoxypentaméthylèneglycols, polyoxyhexaméthylèneglycols, ayant une masse moléculaire moyenne en nombre ( $\overline{M}n$ ) comprise entre 100 et 200 000 et de préférence entre 200 et 50 000, ainsi que les polyesterdiols aliphatiques tels que les polyadipates d'alcoylèneglycols ou d'oxyalcoylèneglycols ou les polycaprolactones ou les polyesterdiols aromatiques tels que les polytéréphtalates d'alcoylèneglycols ou d'oxyalcoylèneglycols ayant une masse moléculaire moyenne en nombre comprise entre 100 et 200 000 et de préférence entre 200 et 50 000.

Aux diols précités s'ajoutent également les polyols ayant au moins trois groupements hydroxyles dans la molécule, par exemple triméthylolpropane, triméthyloléthane, pentaerythritol, lesdits polyols étant utilisés en quantité globale représentant au plus 60% et de préférence entre 0,5 et 15% du poids desdits diols, ces polyols jouant le rôle d'agents de réticulation.

Les isocyanates organiques polyfonctionnels, qui sont utilisés conjointement aux polyols, sont des composés organiques possédant au moins deux fonctions isocyanates dans leur molécule et ayant une masse moléculaire en nombre inférieure à 5 000.

De tels isocyanates polyfonctionnels peuvent être des isocyanates aliphatiques non cycliques ou cycliques tels que diisocyanate-1,6 hexane, isophorone diisocyanate, biuret triisocyanate, trimère de l'isophorone diisocyanate, diméryldiisocyanate, trimère du diisocyanatohexane, diisocyanato-4,4' dicyclohexylméthane,bis (isocyanatométhyl)-1,3 cyclohexane, ester méthylique de l'acide diisocyanato-2,6 hexanoique ou encore des isocyanates aromatiques tels que diisocyanato-2,4 toluène, diisocyanato-2,6 toluène, diisocyanato-1,5 naphtalène, diisocyanato-4,4' diphénylméthane, diisocyanato-2,4' diphénylméthane, diisocyanato-4,4'diphénylméthane carbodiimidisé ou uréthanisé, triisocyanato-triphénylméthane, trimère du diisocyanato-2,4 toluène, uretdione de diisocyanato-2,4 toluène ou des acides diisocyanato 2,4 toluène sulfoniques, isocyanates polymères dérivés du diisocyanato-4,4' diphénylméthane. Les isocyanates organiques polyfonctionnels utilisables suivant l'invention peuvent être également choisis parmi les isocyanates prépolymères résultant de la réaction contrôlée d'un diisocyanate organique sur un polyol, par exemple adduct d'un diisocyanato toluène avec le triméthylolpropane.

Avantageusement le système précurseur de polyuréthanne renferme un catalyseur de la réaction de formation de polyuréthanne.

Les catalyseurs susceptibles d'être employés suivant l'invention pour initier la réaction de formation in situ de polyuréthanne entre le ou les polyols et le ou les isocyanates polyfonctionnels peuvent être choisis parmi les divers catalyseurs proposés dans ce but. Conviennent tout particulièrement les composés organiques métalliques ayant un caractère d'acide de LEWIS et plus spécialement les composés organiques de l'étain, notamment octoate d'étain, dilaurate de dibutylétain, bis dodécylmercaptide de dibutylétain.

Les proportions respectives du ou des polyols et du ou des isocyanates polyfonctionnels à utiliser pour constituer le système précurseur de polyuréthanne correspondent sensiblement à celles assurant une stoechiométrie entre les groupements isocyanates et les groupements hydroxyles, avec de préférence emploi d'un léger excès du ou des polyisocyanates par rapport à la stoechiométrie pour prévenir d'éventuelles réactions secondaires parasites avec certains monomères acryliques.

La quantité de catalyseur de la réaction de formation de polyuréthanne correspond à celle généralement préconisée pour cette réaction. Avantageusement ladite quantité peut représenter 0,1 à 5 % et de préférence 0,5 à 3 % du poids global du ou des polyols et du ou des isocyanates polyfonctionnels contenus dans le système précurseur de polyuréthanne.

Avantageusement la phase acrylique monomère inclut jusqu'à 10% et de préférence entre 0,5 et 5% en poids d'un ou plusieurs esters pluriacryliques.

Les monomères monoacryliques sont en particulier des esters et nitriles acryliques et notamment des composés de formule générale $CH_2 = \underset{R}{\overset{|}{C}} - Y$

dans laquelle R désigne un atome d'hydrogène ou un radical alcoyle en $C_1$ à $C_3$ et Y représente un groupement nitrile ou un reste - $COOR_2$ avec $R_2$ désignant un radical choisi parmi les radicaux monovalents renfermant jusqu'à 12 atomes de carbone et notamment parmi les radicaux alcoyles, aminoalcoyles, époxyalcoyles, hydroxyalcoyles et chloroalcoyles en $C_1$ à $C_{18}$, les radicaux cycloalcoyles ou hétérocycliques en $C_4$ à $C_{12}$ et les radicaux alcényles en $C_2$ à $C_{18}$. Des exemples de ces monomères sont tels que méthacrylate de méthyle, méthacrylate d'isobutyle, méthacrylate d'hexyle, méthacrylate de lauryle, acrylate d'éthyle, acrylate d'isobutyle, acrylate d'éthyl-2 hexyle, méthacrylate de glycidyle, acrylate de glycidyle, acrylonitrile ou méthacrylonitrile, acrylate d'hydroxyéthyle, acrylate d'hydroxypropyle, méthacrylate d'hydroxyéthyle, méthacrylate d'hydroxypropyle.

Les monomères pluriacryliques, c'est-à-dire possédant au moins deux groupements acryliques dans la molécule peuvent être choisis notamment parmi :
- les esters polyacryliques de polyols, qui sont définis dans US-A-3 218 305 et comprennent en particulier des diacrylates et diméthacrylates d'alcoylène tels que diacrylates ou diméthacrylates de tétraméthylène ou d'hexaméthylène ou des diacrylates et diméthacrylates de poly(alcoylèneglycol) tels que diméthacrylates ou diacrylates de diéthylèneglycol, de triéthylèneglycol, de tétraéthylèneglycol, de polyéthylèneglycol ou encore de dipropylène glycol, des triacrylates ou triméthacrylates tels que triacrylate o triméthacrylate de triméthylolpropane, des tétracrylates ou tétraméthacrylates tels que tétracrylate et tétraméthacrylate de diglycérol. A ces esters acryliques de polyols peuvent encore s'ajouter des esters acryliques de polyols tels que tétracrylate et tétraméthacrylate de pentaerythritol ou même des pentacrylates et pentaméthacrylates tels que ceux de pentaerythritolmonohydroxy ;
- les esters prépolymères à groupements acryliques terminaux préparés, comme décrit dans US-A-4 018 851, en faisant tout d'abord réagir un polyoxyalcoylène polyol, sur lequel a été préalablement greffé un monomère vinylique, avec un excès molaire d'un polyisocyanate cycloaliphatique ou aromatique, puis en traitant le produit obtenu par un excès molaire d'un acrylate ou méthacrylate d'hydroxyalcoyle ou d'aminoalcoyle;
- les esters prépolymères à groupements acryliques terminaux préparés, comme décrit dans US-A-3 993 815, en traitant par un acrylate ou méthacrylate d'hydroxyalcoyle ou d'aminoalcoyle le produit de réaction d'un excès d'un isocyanate avec une polyamine à groupements aminés primaires ou secondaires ou un polyol ; et
- les monomères du type uréthanne/acrylate ou uréide/acrylate définis dans DE-A-2 324 822 et son

EP 0 327 772 A1

correspondant CA-A-1 009 792 ou dans US-A-3 425 988 et résultant de la réaction d'un polyisocyanate avec un ester acrylique tel qu'un acrylate ou un méthacrylate dont le reste ester possède un groupement hydroxyle ou un groupement aminé primaire ou secondaire.

Des monomères insaturés non acryliques, polymérisables par voie radicalaire et exempts de groupements carboxyliques libres, peuvent être éventuellement présents dans la phase monomère en association avec les monomères acryliques. Ces monomères non acryliques sont notamment tels que styrène, alpha-méthylstyrène, divinylbenzène, indène, vinylpyrrolidone, acétate de vinyle.

La proportion des monomères insaturés non acryliques éventuellement présents dans la phase monomère n'excède pas 20 % du poids global des monomères qu'elle renferme.

Suivant l'invention l'expression "monomères acryliques" comprend également les sirops formés de prépolymères de monomères acryliques.

La résine époxyde présente dans la formulation adhésive suivant l'invention peut consister en une résine époxyde unique ou en un mélange de résines époxydes, que l'on choisi parmi les diverses résines époxydes connues, qui renferment au moins deux groupements époxydes dans leur molécule. Des exemples de résines époxydes utilisables suivant l'invention sont tels que diglycidyl éther du bis(hydroxy-4phényl)-2,2 propane encore appelé bisphénol A, diglycidyléther du tétrabromobisphénol A, diglycidyl éther du bis (hydroxy-4 phényl) méthane encore appelé bisphénol F, triglycidyléther du trihydroxy-phénylméthane, triglycidyléther du paraaminophénol, tétraglycidyléther de la méthylène dianiline, tétraglycidyléther du tétraphényloléthane, polyglycidyléthers de résines phénol/formol, polyglycidyléthers de résines crésol/formol, résines polyépoxydées du type époxyhydantoines, époxycyanurates, polyoxypropylènes époxydés, phtalates de glycidyle et résines époxydes cycloaliphatiques.

Comme indiqué précédemment, la formulation adhésive renferme un durcisseur latent pour la résine époxyde, c'est-à-dire suivant l'invention un composé qui est susceptible de réticuler la résine époxyde lorsque la température au sein de la formulation adhésive dépasse un certain seuil, en particulier a une valeur supérieure à 60° C et de préférence supérieure à 80° C, et qui est sensiblement inactif au sein de la composition lorsque la température de cette dernière est en-dessous dudit seuil. Une description des durcisseurs de résine époxyde parmi lesquels peut être choisi le durcisseur latent utilisé dans la formulation adhésive suivant l'invention est donnée, entre autres, dans les livres "HANDBOOK OF EPOXY RESINS" de MM. LEE et NEVILLE (MAC GRAW HILL ED. 1967), Chapitres 7 à 13 et 15-16, et "EPOXY RESINS : CHEMISTRY AND TECHNOLOGY." de MM. MAY et TANAKA (DEKKER ED. 1973), pages 239 à 325. Des durcisseurs préférés suivant l'invention sont constitués par les diamines aromatiques, notamment bis-(aminophényl)sulfones telles que la bis(amino-4 phényl) sulfone, et le dicyandiamide. On peut suivant l'invention faire préréagir le durcisseur de résine époxyde de type amine aromatique avec une partie de la résine époxyde pour former un adduct et utiliser l'adduct ainsi obtenu comme durcisseur modifié.

La quantité de durcisseur latent de type diamine aromatique présent dans la formulation représente avantageusement 1 à 30 % et de préférence 5 à 15 % du poids de la résine époxyde.

Pour améliorer l'activité du durcisseur précité, on peut ajouter à la formulation adhésive un ou plusieurs catalyseurs, qui consistent en particulier en acides de Lewis, notamment $BF_3$ et $S_nCl_2$, ou en les complexes de tels acides de Lewis avec des amines telles que monoéthylamine (en abrégé MEA), diméthylaniline, benzylamine, pipéridine, ou encore avec des éthers tels que les oxydes dialcoyliques comme l'oxyde d'éthyle ou l'oxyde de méthyle, ou bien encore avec des alcools tels que méthanol, éthylène glycol, butylène glycol, diéthylène glycol.

Ces composés de type acides de Lewis peuvent être également utilisés comme durcisseurs de la résine époxyde, en quantité allant de 0,5 à 10 % et de préférence de 1 à 6 % du poids de cette résine.

Le générateur de radicaux libres, qui est utilisé dans la formulation adhésive pour causer la polymérisation des monomères acryliques et autres polymérisables par voie radicalaire, peut être choisi parmi les divers générateurs de radicaux libres connus solubles dans la phase monomère. Le générateur de radicaux libres peut consister notamment en un photo-initiateur, par exemple un composé choisi parmi la benzophénone, l'acétophénone, les acétonaphtones, les dérivés acryliques de tels produits, les alcoyléthers de benzoïne et notamment éthyléther de benzoïne, les sulfoxydes acryliques et en particulier diphénylsulfoxyde, le bleu de méthylène seul ou associé au paratoluène sulfinate, ledit photo-iniateur étant éventuellenent associé à un photo-sensibilisateur, par exemple une cyanine, la dihydroxy-1,1' diméthoxy-3,3' benzophénone, les di(hydroxy-2-phényl)benzotriazoles ou encore les trialcoylphosphates tels que le tributylphosphate, ledit générateur de radicaux libres fournissant des radicaux libres lorsqu'il est activé au moyen d'un rayonnement tel qu'un rayonnement ultra-violet ou autres. Avantageusement le générateur de radicaux libres est un composé peroxydé, par exemple un hydroperoxyde tel que l'hydroperoxyde de cumène, l'hydroperoxyde de tertiobutyle, un peroxyde comme le peroxyde de benzoyle, le peroxyde de dicumyle, le peroxyde de méthylisobutylcétone, le peroxyde de ditertiobutyle, un peracide, un perester tel que perben-

5

zoate de tertiobutyle, peracétate de tertiobutyle ou encore per-éthyl-2 hexoate de tertiobutyle, un persulfate ou encore un composé du type azobisnitrile tel que l'azobisisobutyronitrile, ledit générateur fournissant des radicaux libres soit par activation thermique seulement ou/et par association avec un composé activateur, par exemple une amine aromatique tertiaire telle que la diméthyl-paratoluidine ou la diisopropanol-paratoluidine ou encore un produit de réaction d'un aldéhyde tel que butyraldéhyde, acroléine ou homologue avec une amine telle que l'aniline ou la butylamine. Le générateur de radicaux libres du type composé peroxydé et le composé activateur associé peuvent être présents simultanément dans la formulation adhésive lorsque la vitesse de génération des radicaux libres par l'association ainsi réalisée est suffisamment faible aux températures de stockage ou/et de manipulation de ladite formulation pour ne pas conduire à un durcissement prématuré de la formulation adhésive pendant la durée du stockage ou des manipulations de cette formulation. Avantageusement, et surtout lorsque la vitesse de génération des radicaux libres par le système résultant de l'association du composé péroxydé et de l'activateur conduit à un durcissement rapide de la formulation adhésive aux températures de stockage ou/et de manipulation de cette formulation, la formulation adhésive est constituée sous la forme bicomposante, c'est-à-dire comporte deux composantes que l'on réunit au moment de l'emploi comme il sera indiqué plus loin, la première desdites composantes renfermant l'un des constituants du système générateur de radicaux libres tandis que la deuxième desdites composantes renferme l'autre constituant dudit système.

La quantité de générateur de radicaux libres peut varier assez largement selon la nature dudit générateur et celle des monomères à polymériser par voie radicalaire. Le plus souvent, ladite quantité représente de 0,1 % à 5 % et de préférence de 0,2 % à 4 % du poids des monomères à polymériser par voie radicalaire.

Lorsque le générateur de radicaux libres est un composé peroxydé utilisé en association avec un composé activateur, ledit composé activateur est employé en quantité comprise dans les limites indiquées pour la quantité du composé générateur de radicaux libres, c'est-à-dire de 0,1 % à 5 % et de préférence de 0,2 % à 4 % du poids des monomères à polymériser par voie radicalaire. Avantageusement le composé activateur est utilisé en quantité égale à ou voisine de celle qui correspond à la stoechiométrie de la réaction avec le composé générateur de radicaux libres.

La formulation adhésive peut également inclure un ou plusieurs promoteurs conventionnels d'adhésion, notamment composés tels que silanes, titanates ou encore phosphates polymérisables ou non comme les esters phosphoriques à groupements acryliques terminaux, qui sont solubles dans les monomères à polymériser, la quantité de promoteur d'adhésion tant celle utilisée habituellement pour le composé choisi à cet effet.

En plus de ses constituants principaux, à savoir monomères acryliques et éventuellement monomères insaturés non acryliques, système précurseur de polyuréthanne, générateur de radicaux libres, résine époxyde, durcisseur et éventuellement promoteur d'adhésion, catalyseur de durcissement et activateur, la formulation adhésive peut encore renfermer un ou plusieurs des additifs utilisés habituellement dans les formulations adhésives acryliques. Ces additifs peuvent être, en particulier, des accélérateurs de polymérisation tels que saccharine, ortho-aminophénol, sels organiques métalliques comme naphténate de cuivre ou de cobalt, des plastifiants et notamment phtalate de dibutyle, phtalate de dioctyle ou encore polyesters oligomères, des oligomères réactifs tels que les oligomères uréthanne/(méth)acrylate ou les oligomères polyester/(méth)acrylate, des colorants, des charges, des pigments, des agents mouillants, des agents épaississants inorganiques comme la silice finement divisée ou polymériques comme les polymères acryliques et notamment les polyméthacrylates tels que polyméthyl-méthacrylates, des agents stabilisants et notamment des quinones ou hydroquinons ou des phénols comme le di-tertiobutyl-2,6 méthyl-4 phénol. Les additifs précités sont utilisés en quantités correspondant à celles généralement préconisées dans l'art.

La formulation adhésive suivant l'invention peut se présenter sous la forme monocomposante ou sous la forme bicomposante. Dans sa forme monocomposante, la formulation adhésive consiste en un mélange unique de tous les ingrédients qu'elle doit renfermer.

Cette forme monocomposante peut être retenue lorsque le générateur de radicaux libres est du type photoinitiateur ou du type composé peroxydé activable thermiquement. Lorsque les radicaux libres sont produits en associant un générateur de radicaux libres du type composé peroxydé avec un composé activateur, la forme monocomposante ne peut être retenue pour la formulation adhésive que si la vitesse de génération des radicaux libres est insuffisante pour provoquer un durcissement prématuré de la formulation adhésive aux températures de stockage de ladite formulation ou/et aux températures de manipulation de cette formulation aux fins de réalisation de collages. Dans sa forme bicomposante, qui est à retenir lorsque les radicaux libres sont produits en associant un générateur de radicaux libres du type composé peroxydé avec un composé activateur et surtout lorsque la vitesse de génération des radicaux libres provoquerait un durcissement de la formulation adhésive aux températures de stockage de ladite formulation ou/et aux températures de manipulation de cette formulation aux fins de réalisation de collages, la formulation adhésive se présente en deux parties. L'une des parties de ladite formulation adhésive bicomposante, consiste en un mélange intime d'une fraction majoritaire ou de la totalité des monomères polymérisables par voie radicalaire avec tous les autres ingrédients, notamment les composantes du système précurseur de polyuréthanne, la résine époxyde et le durcisseur, qui entrent dans la préparation de la formulation à l'exception soit du composé activateur ou bien du composé générateur de radicaux libres, tandis que l'autre partie de la formulation adhésive consiste en un mélange intime, de préférence en une solution, du composé activateur ou générateur de radicaux libres restant dans, suivant le cas, le reste des monomères polymérisables par voie radicalaire ou un solvant volatil inerte. Cette dernière partie de la formulation adhésive peut éventuellement renfermer le durcisseur de la résine époxyde.

La formulation adhésive monocomposante ou chacune des parties de la formulation adhésive bicomposante peut être préparée par toute méthode de mélangeage permettant de produire un mélange homogène stable des ingrédients utilisés pour sa préparation. En particulier les composantes du système précurseur de polyuréthanne peuvent être ajoutées aux monomères acryliques soit séparément ou après qu'au moins deux d'entre elles aient été prémélangées.

Lorsque le durcisseur de la résine époxyde est actif à des températures inférieures à 80° C, il est préférable de l'incorporer aux monomères acryliques après avoir ajouté à ces derniers le système précurseur de polyuréthanne et formé le réseau correspondant de polyuréthanne au sein desdits monomères.

Suivant une forme préférée de l'invention, une fraction des monomères entrant dans la composition de la formulation adhésive consiste en un ou plusieurs acides insaturés monocarboxyliques ou polycarboxyliques polymérisables par voie radicalaire, notamment acide acrylique ou acide méthacrylique, lesdits acides insaturés mono- ou polycarboxyliques jouant, entre autres, le rôle de promoteur d'adhésion. Cette fraction constituée d'acides carboxyliques insaturés représente avantageusement environ 1 à 80 % et de préférence 5 à 50 % du poids global des monomères polymérisables par voie radicalaire utilisés dans la formulation adhésive.

Lorsque, dans cette forme de l'invention, le générateur de radicaux libres est un composé photoiniateur générant des radicaux libres sous l'action d'un rayonnement, par exemple rayonnement UV, ou encore un composé générant des radicaux libres par activation thermique, la formulation adhésive est généralement du type monocomposante.

Par contre, lorsque dans ladite forme préférée de l'invention les radicaux libres sont produits par un système associant un composé peroxydé avec un composé activateur, la formulation adhésive se présente sous une forme bicomposante de telle sorte que l'une des composantes de la formulation renferme tout ou partie des monomères polymérisables par voie radicalaire ainsi que le système précurseur de polyuréthanne et l'un des constituants, soit composé peroxydé ou composé activateur, du système générateur de radicaux libres, tandis que l'autre composante de la formulation renferme l'autre constituant du système générateur de radicaux libres et, si elle existe, la partie des monomères non incorporée dans la composante précédente, la résine époxyde, le durcisseur latent pour la résine époxyde ainsi que les autres additifs éventuellement utilisés dans la composition de la formulation adhésive étant présents dans l'une ou l'autre desdites composantes et de préférence dans celle desdites composantes dont ils ne sont pas susceptibles de perturber la stabilité au stockage et/ou la stabilité au cours des manipulations. De préférence dans une telle formulation la composante renfermant le système précurseur de polyuréthanne renferme également le composé activateur du système générateur de radicaux libres et est exempte de monomères polymérisables par voie radicalaire et porteurs de groupements carboxyles libres, tandis que la composante renfermant la résine époxyde renferme également le composé peroxydé du système générateur de radicaux libres et la totalité des monomères polymérisables par voie radicalaire et porteurs de groupements carboxyliques libres.

La formulation adhésive suivant l'invention est utilisable pour effectuer la liaison d'éléments variés et notamment d'éléments structuraux. Les éléments à lier ou à coller peuvent être en matériaux tels que métaux et notamment fer, acier, cuivre, aluminium, ou encore matières plastiques, matériaux composites, bois, verre, céramiques. Cette formulation adhésive est en particulier adaptée pour lier entre eux des éléments structuraux constitués de tôles métalliques et notamment de tôles en acier, éventuellement galvanisées ou zinguées, ayant subi ou non un dégraissage.

Pour réaliser une liaison entre deux éléments à l'aide de la formulation adhésive du type monocomposante, on enduit la zone de la surface de l'un des éléments, où l'on désire former le joint de colle, à l'aide de la formulation adhésive et sur la zone ainsi enduite, on applique la partie à coller correspondante de la surface du second élément. On maintient alors les deux éléments en contact en exerçant sur l'assemblage une pression appropriée, éventuellement avec augmentation de la température ou opération en présence d'un rayonnement ultra-violet si le générateur de radicaux libres est activable thermiquement ou par irradiation ultra-violette, jusqu'à l'obtention d'un durcissement suffisant du joint adhésif reliant les deux éléments.

Pour réaliser une liaison entre deux éléments à l'aide de la formulation adhésive du type bicomposante, on enduit la zone de la surface de l'un des éléments, où l'on veut former le joint de colle, à l'aide de la partie de la formulation adhésive renfermant le système générateur de radicaux libres et l'on revêt la partie à coller correspondante de la surface du second élément à l'aide de la partie de la formulation adhésive renfermant l'activateur, puis l'on applique les zones ainsi enduites l'une sur l'autre et maintient les deux éléments en contact en exerçant sur l'assemblage une pression appropriée jusqu'à l'obtention d'un durcissement suffisant du joint de colle.

La formulation adhésive suivant l'invention, du type photoinitiée, en plus des applications précitées, peut être également employée, par exemple, comme vernis pour les circuits imprimés ou encore comme vernis pour la réalisation de revêtements d'étanchéité ou de revêtements anti-corrosion.

L'invention est illustrée par les exemples suivants donnés à titre non limitatif.

EXEMPLE 1

On préparait trois formulations adhésives bicomposantes, l'une suivant l'invention (essai A) et les deux autres (essais B et C) à titre de comparaison.

. Essai A

La formulation suivant l'invention avait la composition suivante en parties en poids.

| a) Composante I : | |
|---|---|
| Précurseur de polyuréthanne | |
| . Polyéther diol P 2000$^{\alpha)}$ : | 4,9 |
| . Isocyanate polyfonctionnel$^{\beta)}$ : | 1,9 |
| . Dilaurate de dibutylétain : | 0,2 |
| Autres ingrédients | |
| . Méthacrylate de méthyle : | 19,5 |
| . Diméthacrylate d'éthylène glycol (DMEG) : | 1,5 |
| . Activateur$^{\gamma)}$ : | 2 |
| . Diaminodiphénylsulfone (durcisseur) : | 3,9 |
| b) Composante II | |
| . Méthacrylate de méthyle : | 19,5 |
| . Acide acrylique : | 6 |
| . Résine époxyde$^{\delta)}$ | 38,7 |
| . Hydroperoxyde de cumène (HPC) : | 1,5 |
| . Complexe $BF_3$ . monoéthylamine : | 0,39 |

$\alpha$) - P 2000 : Polyoxypropylène glycol de $\overline{M}n$ égale à 2000

$\beta$) - Adduct de toluène diisocyanate et de triméthylolpropane commercialisé par BAYER sous le nom DESMODUR L 75.

$\gamma$) - Produit de condensation aniline/homologues de l'acroléine commercialisé par BAYER sous le nom VULKACIT 576.

$\delta$) - Diglycidyléther du bisphénol A (en abrégé DGEBA)

La composante I de la formulation suivant l'invention était préparée en réalisant tout d'abord, à température ambiante, un mélange homogène des monomères acryliques et du polyol, puis en incorporant au mélange obtenu l'activateur, le dilaurate d'étain et l'isocyanate polyfonctionnel. A la phase ainsi obtenue on ajoutait alors la diaminodiphénylsulfone en élevant modérément la température jusqu'à dissolution complète dudit produit.

La composante II de la formulation suivant l'invention était obtenue en dissolvant tout d'abord le complexe BF₃.monoéthylamine dans la résine époxyde portée à 60°C, puis en incorporant les monomères acryliques et l'hydroperoxyde de cumène à la solution obtenue.

. Essai B :

Cette première formulation comparative avait la composition suivante en parties en poids.

| a) Composante I | |
| --- | --- |
| . Polyuréthanne : | 7 |
| . Méthacrylate de méthyle : | 19,5 |
| . Diméthacrylate d'éthylène glycol : | 1,5 |
| . Activateur (VULKACIT 576) : | 2 |
| b) Composante II | |
| . Méthacrylate de méthyle : | 19,5 |
| . Acide acrylique : | 6 |
| . Résine époxyde (DGEBA) : | 38,7 |
| . Hydroperoxyde de cumène : | 1,5 |

La composante I de la formulation témoin de l'essai B était préparée en mélangeant intimement les monomères acryliques, puis en dissolvant le polyuréthanne dans le mélange résultant et enfin en incorporant l'activateur à la solution ainsi obtenue.

La composante II de la formulation témoin de l'essai B était préparée en incorporant les monomères acryliques à la résine époxyde, puis en ajoutant l'hydroperoxyde de cumène à la solution obtenue.

Le polyuréthanne utilisé dans la composante I de la formulation témoin de l'essai B était préparé au préalable par polycondensation d'un milieu réactionnel renfermant, en poids, 75,5 parties de polyétherdiol P2000, 3 parties de dilaurate de dibutylétain et la quantité stoechiométrique, par rapport au polyol engagé, d'un isocyanate difonctionnel.

Ladite préparation du polyuréthanne était effectuée en ajoutant l'isocyanate difonctionnel, à température ambiante, au polyétherdiol renfermant le dilaurate de dibutylétain, puis en portant le mélange réactionnel obtenu à 80°C et en maintenant ledit mélange à cette température pendant 1 heure pour que la polycondensation soit complète. Le polyuréthanne ainsi obtenu était substantiellement linéaire pour être soluble dans les monomères acryliques et non réactif.

. Essai C :

Cette deuxième formulation comparative avait la composition suivante en parties en poids.

| a) Composante I | |
| --- | --- |
| . Polyuréthanne : | 7 |
| . Méthacrylate de méthyle : | 19,5 |
| . Diméthacrylate d'éthylène glycol : | 1,5 |
| b) Composante II | |
| . Méthacrylate de méthyle : | 19,5 |
| . Acide acrylique : | 6 |
| . Résine époxyde (DGEBA) : | 38,7 |
| . Hydroperoxyde de cumène : | 1,5 |

La composante I de la formulation témoin de l'essai C était préparée en mélangeant intimement les monomères acryliques, puis en dissolvant le polyuréthanne dans le mélange résultant, tandis que la composante II de ladite formulation était préparée en incorporant les monomères acryliques à la résine

9

époxyde, puis en ajoutant l'hydroperoxyde de cumène à la solution obtenue.

Le polyuréthanne utilisé dans la composante I de la formulation témoin de l'essai C était obtenu comme indiqué dans l'essai B.

Les formulations adhésives bicomposantes obtenues dans les essais A à C étaient utilisées pour effectuer des collages de stérigmes en acier dégraissés au trichloréthylène.

On réalisait des assemblages constitués de deux stérigmes ayant chacun 10 cm de longueur, 2,5 cm de largeur et 0,4 mm d'épaisseur que l'on collait l'un à l'autre au moyen de la formulation adhésive bicomposante choisie. Pour produire lesdits assemblages, on enduisait l'une des faces d'un premier stérigme, préalablement dégraissée au trichloréthylène, d'une couche uniforme de la composante I de la formulation adhésive et revêtait l'une des faces d'un second stérigme, également dégraissée au trichloréthylène, à l'aide d'une couche uniforme de la composante II de ladite formulation, puis l'on appliquait l'une sur l'autre les faces ainsi enduites des deux stérigmes de manière à former un assemblage comportant un joint adhésif d'environ 1,25 cm de longueur.

Deux types d'assemblages étaient réalisés, à savoir des assemblages de type 1 pour lesquels les faces enduites des stérigmes étaient plaquées directement l'une sur l'autre ou des assemblages de type 2 pour lesquels les faces enduites des stérigmes étaient séparées par deux cales en polytétrafluoroéthylène de 0,2 mm d'épaisseur de manière à former un joint adhésif d'épaisseur calibrée égale à 0,2 mm, cette épaisseur calibrée correspondant à celle des joints adhésifs de certains collages réalisés dans l'industrie automobile.

Les assemblages obtenus faisaient ensuite l'objet d'un traitement thermique, après quoi on déterminait la résistance au cisaillement du joint adhésif en soumettant les assemblages à un essai de traction cisaillement en suivant les prescriptions de la norme ASTM D 1002-72. Pour la mise en oeuvre de l'essai de traction cisaillement, la vitesse de déplacement des mors de l'appareil de traction était de 1,33 mm/min pour les assemblages de type 1 et de 10 mm/min pour les assemblages de type 2.

Les valeurs moyennes de la résistance au cisaillement pour les diverses formulations, déterminées sur dix assemblages, sont données dans le tableau I.

Dans ce tableau I, on donne également la valeur moyenne, déterminée sur dix mesures, du "temps de gel en pot", c'es-à-dire du temps au bout duquel un volume de 2 $cm^3$ de la formulation adhésive, résultant du mélange des composantes I et II, placé dans un tube calibré en verre de 1,5 cm de diamètre ne s'écoule plus quand on retourne le tube. Ce temps est caractéristique du temps de prise au delà duquel la formulation est durcie ou les éléments de l'assemblage sont liés de·façon irréversible.

La comparaison des résultats figurant au tableau I fair ressortir que la formulation adhésive suivant l'invention (essai A) conduit, par rapport aux formulations adhésives témoins (essais B et C), à une amélioration notable de la stabilité thermique de joint adhésif surtout lorsque l'épaisseur dudit joint augmente.

## TABLEAU I

| Essai | Type d'assemblage | Temps de gel en pot à température ambiante (mn) | Résistance au cisaillement après traitement thermique (MPa) | | | |
|---|---|---|---|---|---|---|
| | | | 10 heures à l'ambiante | 1 heure à 80°C | 1 heure à 80°C + 1 heure à 150°C | 1 heure à 80°C + 1 heure à 220°C |
| A | 1 | 30 | 10,6 | 17 | 18 | 18,5 |
| B | | 56 | 11 | 12,5 | 14 | 16 |
| C | | ∞ | 0 | 8 | 12 | 11 |
| A | 2 | 6 | 6 | 8,2 | 10,5 | 17,2 |
| B | | 7 | 7 | 6 | 5,5 | 3 |
| C | | 0 | 0 | 4 | 5 | 2 |

## EXEMPLE 2 :

On préparait une série de formulations adhésives bicomposantes suivant l'invention comme décrit dans l'essai A de l'exemple 1, en changeant toutefois, d'une formulation à l'autre, la nature du monomère acide carboxylique insaturé sans en changer la quantité.

En utilisant les formulations adhésives ainsi obtenues et en opérant comme indiqué dans l'exemple 1, on formait des assemblages de stérigmes en acier de type 1 et soumettait lesdits assemblages à un essai de traction cisaillement suivant la norme ASTM D 1002-72 pour déterminer la résistance au cisaillement du joint de colle.

Les valeurs moyennes de la résistance au cisaillement du joint adhésif, déterminées sur dix assemblages, ainsi que les temps de gel en pot des formulations adhésives sont donnés dans le tableau II en fonction de la nature du monomère acide carboxylique insaturé.

Des résultats présentés dans le tableau II, il ressort que la présence d'acide acrylique dans la formulation adhésive conduit à une amélioration plus importante de la résistance au cisaillement du joint adhésif que la présence d'acide méthacrylique ou d'anhydride maléique.

TABLEAU II

| Nature de l'acide insaturé | Temps de gel en pot à température ambiante (min) | Résistance au cisaillement après traitement thermique (MPa) | | | |
|---|---|---|---|---|---|
| | | 10 heures à l'ambiante | 1 heure à 80°C | 1 heure à 80°C + 1 heure à 150°C | 1 heure à 80°C + 1 heure à 220°C |
| Acide acrylique | 30 | 10,6 | 17 | 18 | 18,5 |
| Acide méthacrylique | 10 | 7 | 6,5 | 11 | 16 |
| Anhydride maléique | 90 | 8,5 | 10 | 7 | 16 |

EXEMPLE 3 :

On préparait une série de formulations adhésives bicomposantes suivant l'invention comme décrit dans l'essai A de l'exemple 1, en faisant varier, d'une formulation à l'autre, les quantités relatives de méthacrylate de méthyle et d'acide acrylique sans en changer la quantité globale.

En utilisant les formulations adhésives ainsi obtenues et en opérant comme indiqué dans l'exemple 1, on formait des assemblages de stérigmes en acier du type 1 et soumettait lesdits assemblages à un essai de traction cisaillement pour déterminer la résistance au cisaillement du joint de colle.

Les valeurs moyennes de la résistance au cisaillement du joint adhésif, déterminées sur dix assemblages, ainsi que les temps de gel en pot des formulations adhésives sont donnés dans le tableau III en fonction du rapport r, exprimé en %, de la quantité pondérale d'acide acrylique à la quantité pondérale d'esters acryliques dans la formulation.

TABLEAU III

| r (%) | Temps de gel en pot à température ambiante (min) | Résistance au cisaillement après traitement thermique (MPa) | | | |
|---|---|---|---|---|---|
| | | 10 heures à l'ambiante | 1 heure à 80°C | 1 heure à 80°C + 1 heure à 150°C | 1 heure à 80°C + 1 heure à 220°C |
| 0 | plusieurs jours | 8,5 | 6 | 5,5 | 6 |
| 15 | 70 | 14 | 12 | 13 | 9 |
| 27 | 45 | 13,5 | 14 | 14 | 7 |
| 100 | 5 | 15 | 15 | 15 | 8,5 |

EXEMPLE 4 :

On préparait diverses formulations adhésives bicomposantes suivant l'invention comme indiqué dans l'essai A de l'exemple 1, les compositions desdites formulations étant données dans le tableau IV en parties en poids.

TABLEAU IV

| Formulation | 4.1 | 4.2 | 4.3 | 4.4 | 4.5 | 4.6 |
|---|---|---|---|---|---|---|
| a) Composante I | | | | | | |
| Polyéther diol P 2000 | 13,9 | 13,9 | 13,9 | 20,9 | 13,9 | 7 |
| Isocyanate DESMODUR L 75 | 5,5 | 5,5 | 5,5 | 8,3 | 5,5 | 2,8 |
| Dilaurate de dibutyl étain | 0,6 | 0,6 | 0,6 | 0,9 | 0,6 | 0,3 |
| Méthacrylate de méthyle | 21,2 | 10,6 | 5,3 | 10,6 | 10,6 | 10,6 |
| DMEG | 1,8 | 0,9 | 0,45 | 0,9 | 0,9 | 0,9 |
| Activateur (VULKACIT 576) | 2,4 | 1,2 | 0,6 | 1,2 | 1,2 | 1,2 |
| Diaminodiphénylsulfone | 1,8 | 4,5 | 5,9 | 3,6 | 4,5 | 5,4 |
| b) Composante II | | | | | | |
| Méthacrylate de méthyle | 21,2 | 10,6 | 5,3 | 10,6 | 10,6 | 10,6 |
| Acide acrylique | 11,6 | 5,8 | 2,9 | 5,8 | 5,8 | 5,8 |
| Résine époxyde (DGEBA) | 18 | 45 | 58,5 | 36 | 45 | 54 |
| HPC | 1,8 | 0,9 | 0,45 | 0,9 | 0,9 | 0,9 |
| Complexe $BF_3$.monoéthylamine | 0,2 | 0,45 | 0,6 | 0,4 | 0,5 | 0,6 |

Dans les formulations 4.1 à 4.6 le rapport de la quantité pondérale d'acide acrylique à la quantité pondérale de monomères insaturés non acides est constant. En outre dans les formulations 4.1 à 4.3 la quantité globale de précurseur du réseau polyuréthanne représente 20 % en poids de la formulation tandis que dans les formulations 4.4 à 4.6, c'est la quantité globale de monomères acryliques et de système générateur de radicaux libres qui est constante et représente 30 % en poids de la formulation.

En utilisant les formulations adhésives ainsi obtenues et en opérant comme indiqué dans l'exemple 1, on formait des assemblages de type 1 à partir de stérigmes en acier et soumettait lesdits assemblages à un essai de traction cisaillement pour déterminer la résistance au cisaillement du joint de colle.

Les valeurs moyennes de la résistance au cisaillement du joint adhésif, déterminées sur dix assemblages, ainsi que les temps de gel en pot des formulations adhésives sont donnés dans le tableau V.

TABLEAU V

| Formulation | Temps de gel en pot à température ambiante (min) | Résistance au cisaillement après traitement thermique (MPa) | | | |
|---|---|---|---|---|---|
| | | 10 heures à l'ambiante | 1 heure à 80°C | 1 heure à 80°C + 1 heure à 150°C | 1 heure à 80°C + 1 heure à 220°C |
| 4.1 | 40 | 10,2 | 9,3 | 14 | 8,2 |
| 4.2 | 27 | 2 | 1,8 | 13 | 15,6 |
| 4.3 | 74 | 0,5 | 1,3 | 11 | 15,2 |
| 4.4 | 33 | 1,5 | 1,1 | 9,2 | 13,4 |
| 4.5 | 27 | 1,4 | 1,7 | 12,6 | 15,7 |
| 4.6 | 15 | 2,9 | 4,2 | 15,2 | 16,9 |

EXEMPLE 5 :

On préparait diverses formulations adhésives bicomposantes suivant l'invention comme indiqué dans l'essai A de l'exemple 1, les compositions desdites formulations étant données dans le tableau VI en parties en poids.

Dans les formulations 5.1 à 5.12 le rapport de la quantité pondérale d'acide acrylique à la quantité pondérale de monomères insaturés non acides était maintenu constant. En outre le rapport de la quantité pondérale de système précurseur du réseau polyuréthanne à la quantité pondérale globale de monomères acryliques et de système générateur de radicaux libres avait la valeur 1/3 dans les formulations 5.1 à 5.5, la valeur 1/7 dans les formulations 5.6 à 5.9 et la valeur 1/14 dans les formulations 5.10 à 5.12.

En utilisant les formulations adhésives ainsi obtenues et en opérant conme indiqué dans l'exemple 1, on formait des assemblages de type 1 à partir de stérigmes en acier et soumettait lesdits assemblages à un essai de traction cisaillement comme indiqué dans l'exemple 1 pour déterminer la résistance au cisaillement du joint adhésif.

Les valeurs moyennes de la résistance au cisaillement du joint adhésif, déterminées sur dix assemblages, ainsi que les temps de gel en pot des formulations sont donnés dans le tableau VII.

## TABLEAU VI

| Formulation | 5.1 | 5.2 | 5.3 | 5.4 | 5.5 | 5.6 | 5.7 | 5.8 | 5.9 | 5.10 | 5.11 | 5.12 |
|---|---|---|---|---|---|---|---|---|---|---|---|---|
| a) Composante I | | | | | | | | | | | | |
| Polyétherdiol P2000 | 13,9 | 10,4 | 7 | 5,2 | 3,5 | 7 | 5,2 | 3,5 | 1,75 | 3,2 | 2,8 | 2,3 |
| Isocyanate DESMODUR L 75 | 5,5 | 4,1 | 2,8 | 2,1 | 1,4 | 2,8 | 2,1 | 1,4 | 0,7 | 1,3 | 1,1 | 0,9 |
| Dilaurate de dibutyl étain | 0,6 | 0,5 | 0,3 | 0,3 | 0,1 | 0,3 | 0,3 | 0,1 | 0,05 | 0,15 | 0,1 | 0,1 |
| Méthacrylate de méthyle | 21,2 | 15,9 | 10,6 | 7,9 | 5,3 | 25 | 18,5 | 12,3 | 6,2 | 23,05 | 19,8 | 16,5 |
| DMEG | 1,8 | 1,4 | 0,9 | 0,7 | 0,45 | 2,1 | 1,6 | 1,1 | 0,6 | 2 | 1,7 | 1,4 |
| Activateur (VULKACIT 576) | 2,4 | 1,8 | 1,2 | 0,9 | 0,6 | 2,8 | 2,1 | 1,4 | 0,7 | 2,6 | 2,3 | 1,9 |
| Diaminodiphényl sulfone | 1,8 | 3,6 | 5,4 | 6,3 | 7,2 | 1,8 | 3,6 | 5,4 | 7,2 | 2,7 | 3,6 | 4,5 |
| b- Composante II | | | | | | | | | | | | |
| Méthacrylate de méthyle | 21,2 | 15,9 | 10,6 | 7,9 | 5,3 | 25 | 18,5 | 12,3 | 6,2 | 23,05 | 19,8 | 16,5 |
| Acide acrylique | 11,6 | 8,7 | 5,8 | 4,3 | 2,9 | 13 | 10,2 | 6,7 | 3,4 | 12,7 | 10,9 | 9 |
| Résine époxyde (DGEBA) | 18 | 36 | 54 | 63 | 72 | 18 | 36 | 54 | 72 | 27 | 36 | 45 |
| HPC | 1,8 | 1,4 | 0,9 | 0,7 | 0,45 | 2,1 | 1,6 | 1,1 | 0,6 | 2 | 1,7 | 1,4 |
| Complexe $BF_3$.monoéthylamine | 0,2 | 0,4 | 0,6 | 0,7 | 0,8 | 0,2 | 0,4 | 0,6 | 0,8 | 0,3 | 0,4 | 0,5 |

## TABLEAU VII

| Formulation | Temps de gel en pot à température ambiante (min) | Résistance au cisaillement après traitement thermique (MPa) | | | |
|---|---|---|---|---|---|
| | | 10 heures à l'ambiante | 1 heure à 80°C | 1 heure à 80°C + 1 heure à 150°C | 1 heure à 80°C + 1 heure à 220°C |
| 5.1 | 40 | 10,2 | 9,4 | 14,1 | 8,2 |
| 5.2 | 22 | 6,8 | 9,1 | 15,3 | 16 |
| 5.3 | 15 | 2,3 | 4,2 | 15,2 | 16,9 |
| 5.4 | 16 | 0,9 | 1,9 | 6,9 | 15,8 |
| 5.5 | 22 | 0,4 | 0,5 | 6,8 | 15,7 |
| 5.6 | 46 | 13,7 | 14,3 | 13,4 | 7,1 |
| 5.7 | 28 | 12,9 | 12,6 | 15,3 | 16,3 |
| 5.8 | 15 | 6,9 | 7,8 | 13,5 | 16,7 |
| 5.9 | 17 | 1 | 0,98 | 5,3 | 15,5 |
| 5.10 | 30 | 12,9 | 14,2 | 12,4 | 13,1 |
| 5.11 | 33 | 13 | 11,6 | 13,1 | 14,4 |
| 5.12 | 23 | 11 | 12,7 | 14,1 | 14,5 |

Au vu des résultats consignés dans le tableau VII il ressort que l'augmentation de la teneur en résine époxyde des formulations conduit à une amélioration de la stabilité thermique du joint adhésif aux températures élevées, à savoir de l'ordre de 220°C. En outre, les formulations pour lesquelles le rapport de la quantité de système précurseur du réseau polyuréthanne à la quantité de monomères acryliques est faible présentent une réactivité satisfaisante sur un intervalle de température allant de la température ambiante à environ 220°C. Les formulations 5.7 et 5.10 à 5.12 sont particulièrement intéressantes car elles présentent à la fois une bonne réactivité à température ambiante, ce qui assure rapidement le maintien des pièces à assembler, et une bonne stabilité au moins jusqu'à 220°C.

EXEMPLE 6 :

On préparait diverses formulations adhésives bicomposantes suivant l'invention en variant la nature de la résine époxyde d'une formulation à l'autre sans en changer la quantité.

La composition type de ces formulations est donnée ci-après en parties en poids.

| a)- Composante I | |
|---|---|
| . Polyéther diol P2000 : | 5,4 |
| . Isocyanate DESMODUR L75 : | 2,1 |
| . Dilaurate de dibutylétain : | 0,2 |
| . Méthacrylate de méthyle : | 23,4 |
| . DMEG : | 1,8 |
| . Activateur (VULKACIT 576) : | 2,4 |
| . Diaminodiphénylsulfone : | 3,3 |
| b) - Composante II | |
| . Méthacrylate de méthyle : | 23,4 |
| . Acide acrylique : | 7,2 |
| . Résine époxyde : | 33 |
| . HPC : | 2,4 |
| . Complexe $BF_3$.monoéthylamine : | 0,3 |

En utilisant les formulations adhésives ainsi obtenues et en opérant comme indiqué dans l''exemple 1, on formait des assemblages de type 1 à partir de stérigmes en acier et soumettait lesdits assemblages à un essai de traction cisaillement comme indiqué dans l'exemple 1 pour déterminer la résistance au cisaillement du joint adhésif.

Les valeurs moyennes de la résistance au cisaillement du joint adhésif déterminées, après traitement thermique, sur dix assemblages sont données dans le tableau VIII en fonction de la nature de la résine époxyde.

TABLEAU VIII

| Nature de la résine époxyde | Résistance au cisaillement après traitement thermique (MPa) | |
|---|---|---|
| | 10 heures à l'ambiante | 1h à 80°C + 1h à 220°C |
| . Diglycidyl éther du bisphénol A | 15 | 11 |
| . Tétraglycidyl méthylène dianiline | 18 | 18 |
| . Triglycidyl éther du trihydroxyphényl méthane | 15 | 14 |
| . Polyglycidyl éther de résine phénol/formol | 13 | 15,5 |
| . Diglycidyl éther du tétrabromobisphénol A | 14,5 | 6 |

EXEMPLE 7 :

En opérant comme indiqué dans l'exemple 1, on formait des assemblages de stérigmes en acier en utilisant la formulation adhésive de l'exemple 6 pour laquelle la résine époxyde consistait en diglycidyléther du bisphénol A.

On donne ci-après, en fonction du temps, la résistance au cisaillement des assemblages maintenus à température ambiante pendant toute la durée de leur préparation et des mesures.

| Temps (heures) | Résistance au cisaillement (MPa) |
|---|---|
| 1 | 1 |
| 2 | 1,5 |
| 4 | 8 |
| 24 | 15 |
| 30 | 17 |

Une telle formulation est utilisable à température ambiante. Au bout de 4 heures la prise du joint adhésif est suffisante pour permettre une manipulation des assemblages sans les détruire.

EXEMPLE 8

On préparait une série de formulations adhésives analogues à la formulation définie dans l'essai A de l'exemple 1, en changeant toutefois la nature et la quantité de l'activateur du système générateur de radicaux libres en passant d'une formulation à l'autre.

On donne dans le tableau IX le temps de gel de chacune des formulations en fonction de la nature et de la quantité de l'activateur utilisé.

TABLEAU IX

| Activateur | | Temps de gel en pot à température ambiante (min) |
|---|---|---|
| nature | Quantité en % en poids de la formulation | |
| . VULKACIT 576 | 2 | 30 |
| . VULKACIT 576 | 6 | 19 |
| . N-diméthylparatoluidine | 1,5 | 30 |
| . N-diméthylparatoluidine + saccharine | 1,5 + 0,15 | 15 |
| . VULKACIT 576 + saccharine | 2 + 0,15 | 15 |
| . Naphténate de cobalt | 0,05 | > 480 |
| . N-diméthylparatoluidine + naphténate de cobalt | 1,5 + 0,05 | 10 |
| . N-diméthylparatoluidine + saccharine + Naphténate de cobalt | 1,5 + 0,15 + 0,05 | 7 |

EP 0 327 772 A1

EP 0 327 772 A1

EXEMPLE 9 :

En opérant comme indiqué dans l'exemple 1, on formait des assemblages de stérigmes en acier en utilisant la formualtion adhésive de l'essai A de l'exemple 1 et en faisant varier l'épaisseur du joint adhésif d'un assemblage à l'autre au moyen de cales d'épaisseur calibrée.

On donne dans le tableau X les valeurs moyennes de la résistance au cisaillement du joint adhésif déterminées, après traitement thermique, sur dix assemblages en fonction de l'épaisseur du joint adhésif.

TABLEAU X

| Epaisseur du joint adhésif (mm) | Résistance au cisaillement après traitement thermique | |
| --- | --- | --- |
| | 1 h à 80°C + 1 h à 150°C | 1 h à 80°C + 1 h à 220°C |
| Non mesurable (ASTM 1002-72) | 18 | 18,5 |
| 0,2 | 10 | 17 |
| 0,4 | 7 | . 10 |
| 0,6 | 6 | 6 |
| 0,8 | 6 | 6 |
| 1 | 6 | 6 |

Les formulations adhésives suivant l'invention restent encore efficaces même pour des épaisseurs importantes des joints adhésifs.

EXEMPLE 10

On préparait une série de formulations adhésives analogues à la formulation définie dans l'essai A de l'exemple 1, en changeant toutefois la nature du polyol du système précurseur de polyuréthanne d'une formulation à l'autre sans en changer la quantité.

On donne dans le tableau XI les valeurs moyennes de la résistance au cisaillement du joint adhésif déterminées, après traitement thermique, sur dix assemblages en fonction de la nature du diol.

TABLEAU XI

| Polyol | Résistance au cisaillement après traitement thermique (MPa) | | |
| --- | --- | --- | --- |
| | 1 h à 80°C | 1 h à 80°C + 1 h à 150°C | 1 h à 80°C + 1 h à 220°C |
| Polyétherdiol P 2000 | 17 | 18 | 18,5 |
| Polyesterdiol *) | 13 | 14 | 16 |

*) - Polyester diol ayant une masse moléculaire moyenne en nombre $\overline{M}_n$ égale à environ 1700 et résultant de la réaction de l'acide adipique sur l'éthylène glycol en présence d'anhydride phtalique.

EXEMPLE 11 :

On préparait une série de formulations adhésives bicomposantes épaissies en utilisant comme agent épaississant soit un polyméthacrylate de méthyle ayant une masse moléculaire en poids égale à $10^6$

17

environ et une température de transition vitreuse de 91°C soit une silice finement divisée commercialisée sous le nom de Cab 0 Sil, type M.5, ladite silice ayant une dimension de particules d'environ 0,012 microns.

La composition des formulations ainsi préparées est donnée dans le tableau XII en parties en poids.

TABLEAU XII

| Formulation | 11.1 (témoin) | 11.2 | 11.3 | 11.4 |
|---|---|---|---|---|
| a) Composante I | | | | |
| . Polyéther diol P 2000 | 4,9 | 4,9 | 4,9 | 4,9 |
| . Isocyanate DESMODUR L75 | 1,9 | 1,9 | 1,9 | 1,9 |
| . Dilaurate de dibutyl étain | 0,2 | 0,2 | 0,2 | 0,2 |
| . Méthacrylate de méthyle | 19,5 | 19,5 | 19,5 | 19,5 |
| . DMEG | 1,5 | 1,5 | 1,5 | |
| . TRIM *) | | | | 1,5 |
| . Activateur (VULKACIT 576) | 2 | 2 | 2 | 2 |
| . Diaminodiphényl sulfone | 3,9 | 3,9 | 3,9 | 3,9 |
| . Polyméthacrylate de méthyle | | 7 | | 7 |
| . Silice | | | 5 | |
| B) Composante II | | | | |
| . Méthacrylate de méthyle | 19,5 | 19,5 | 19,5 | 19,5 |
| . Acide acrylique | 6 | 6 | 6 | 6 |
| . Résine époxyde (DGEBA) | 38,7 | 38,7 | 38,7 | 38,7 |
| . HPC | 1,5 | 1,5 | 1,5 | 1,5 |
| . Complexe BF3.monoéthylamine | 0,39 | 0,39 | 0,39 | 0,39 |

*) TRIM : Triméthacrylate de triméthylolpropane.

La composante I de la formulation était préparée comme suit. On réalisait tout d'abord un mélange homogène de l'agent épaississant dans environ 1/3 du méthacrylate de méthyle entrant dans la composition de la composante I. On mélangeait ensuite le reste du méthacrylate de méthyle de ladite composante avec les autres ingrédients qu'elle renferme en suivant le mode opératoire donné dans l'exemple 1. Au mélange ainsi préparé on ajoutait alors le mélange agent épaississant/méthacrylate de méthyle dans des conditions d'agitation propre à fournir une composante I homogène épaissie.

La composante II de la formulation était obtenue comme indiqué dans l'exemple 1.

En utilisant les formulations adhésives ainsi obtenues et en opérant comme indiqué dans l'exemple 1, on formait des assemblages de stérigmes en acier de type 1 ou de type 2 et soumettait lesdits assemblages à un essai de traction cisaillement pour déterminer la résistance au cisaillement du joint adhésif.

Les valeurs moyennes de la résistance au cisaillement du joint adhésif, déterminées sur dix assemblages, sont données dans le tableau XIII.

EP 0 327 772 A1

TABLEAU XIII

| Formulation | Assemblages | Résistance au cisaillement après traitement thermique (MPa) | | | |
|---|---|---|---|---|---|
| | | 10h à 25°C | 1 h à 80°C | 1h à 80°C + 1h à 150°C | 1 h à 80°C + 1h à 220°C |
| 11.1 (Témoin) | Type 1 | 10,6 | | 18 | 18,5 |
| 11.2 | | 11,5 | 13,5 | | 13,5 |
| 11.4 | | 10,5 | 11,6 | 10,3 | 16 |
| 11.1 (Témoin) | Type 2 | | | 10 | 17 |
| 11.2 | | 11 | 14 | 7,5 | 10 |
| 11.3 | | 12,5. | 9 | | 9 |
| 11.4 | | 9,5 | 11,1 | 8 | 10 |

Les formulations épaissies (11.2 à 11.4) sont d'une mise en oeuvre plus facile que la formulation non épaissie (11.1) et en outre elles conduisent à des joints adhésifs présentant une souplesse améliorée. De plus la présence de l'épaississant dans la formulation n'entraîne pas une chute trop importante des propriétés mécaniques du joint adhésif et notamment de sa résistance au cisaillement.

EXEMPLE 12 :

On préparait une série de formulations adhésives bicomposantes analogues à celle définie dans l'essai A de l'exemple 1, en faisant toutefois varier, d'une formulation à l'autre, la quantité pondérale, exprimée en % du poids de la formulation, soit d'HPC et d'activateur ou bien de $BF_3$.monoéthylamine (en abrégé $BF_3$.MEA).

En utilisant les formulations adhésives obtenues et en opérant commé indiqué dans l'exemple 1, on formait des assemblages de stérigmes en acier de type 1 et soumettait lesdits assemblages à un essai de traction cisaillement.

Les valeurs moyennes de la résistance au cisaillement du joint adhésif, déterminées sur dix assemblages, sont données dans le tableau XIV en fonction du paramètre ayant varié.

TABLEAU XIV

| Formulation | | | Résistance au cisaillement après traitement thermique (MPa) | | | |
|---|---|---|---|---|---|---|
| | | | 10h à 25°C | 1 h à 80°C | 1h à 80°C + 1h à 150°C | 1 h à 80°C + 1h à 220°C |
| 12.1 | HPC + VULKACIT 576 | 4 % + 4 % | 10,6 | 17 | 18 | 18,6 |
| 12.2 | HPC + VULKACIT 576 | 2,1 % + 2,1 % | 12,9 | 12,5 | 15,3 | 16 |
| 12.3 | $BF_3$.MEA | 0,4 % | 12,9 | 12,5 | 15,5 | 16 |
| 12.4 | $BF_3$.MEA | 1 % | | 15,4 | 18 | 18 |

EXEMPLE 13 :

On préparait une formulation adhésive monocomposante suivant l'invention dont la composition est donnée ci-après en parties en poids.

19

.

| | |
|---|---|
| . Polyéther diol P 2000 : | 5 |
| . Isocyanate polyfonctionnel (DESMODUR L 75) : | 2 |
| . Méthacrylate de méthyle : | 40,3 |
| . Acide acrylique : | 6,3 |
| . DMEG : | 1 |
| . Peroxyde de ditertio-butyle : | 2,4 |
| . Résine époxyde (DGEBA) : | 37,4 |
| . Diaminodiphénylsulfone : | 3,7 |
| . BF$_3$.MEA : | 1,9 |

Pour ce faire, on réalisait tout d'abord, à température ambiante, un mélange homogène des monomères acryliques et du polyol, puis on incorporait l'isocyanate polyfonctionnel audit mélange. A la phase ainsi obtenue on ajoutait la diaminodiphénylsulfone en élevant modérément la température jusqu'à dissolution complète de ce produit. Au mélange ainsi réalisé on incorporait alors une solution obtenue préalablement en dissolvant le complexe BF$_3$.MEA, puis le peroxyde de ditertiobutyle dans la résine époxyde portée à 60°C.

En utilisant la formulation adhésive monocomposante ainsi préparée et en opérant comme indiqué dans l'exemple 1, avec toutefois enduction d'une face d'un seul stérigme par la formulation, on formait des assemblages de type 1 à partir de stérigmes en acier et soumettait lesdits assemblages à un essai de traction cisaillement comme indiqué dans l'exemple 1 pour déterminer la résistance au cisaillement du joint adhésif.

Les valeurs moyennes de la résistance au cisaillement du joint adhésif déterminées sur dix assemblages, après différents traitements thermiques, sont données dans le tableau XV. Dans ce tableau, on indique également les valeurs du temps de gel en pot de la formulation à 80°C et 150°C.

TABLEAU XV

| Stabilité à température ambiante | | plusieurs mois |
|---|---|---|
| Temps de gel en pot | à 80°C | plusieurs jours |
| | à 150°C | 10 minutes |
| Résistance au cisaillement après traitement thermique (MPa) | 1 h à 80°C | 0 |
| | 1 h à 80°C + 1 h à 150°C | 13 |
| | 1 h à 80°C + 1 h à 220°C | 15,4 |

EXEMPLE 14 :

On préparait trois formulations adhésives monocomposantes suivant l'invention susceptibles d'être durcies sous l'action d'un rayonnement UV. La composition de ces formulations est donnée ci-après en parties en poids.

| Formulations : | 14.1 | 14.2 | 14.3 |
|---|---|---|---|
| . Polyéther diol P 2000 : | 5 | 5 | 5 |
| . Isocyanate (DESMODUR L 75) : | 2 | 2 | 2 |
| . Méthacrylate de méthyle : | 40,3 | 40,3 | 40,3 |
| . Acide acrylique : | 6,3 | 6,3 | 6,3 |
| . DMEG : | 1 | 1 | 1 |
| . Hydroxy.2 méthoxy-4 benzophénone : | 2,5 | | |
| . Benzoïne éthyl éther : | | 2,5 | 2,5 |
| . Tributylphosphate : | | | 2,5 |
| . Résine époxyde (DGEBA) : | 37,4 | 37,4 | 37,4 |
| . Diaminodiphénylsulfone : | 3,7 | 3,7 | 3,7 |
| . BF$_3$.MEA : | 1,9 | 1,9 | 1,9 |

Pour ce faire, on réalisait tout d'abord, à température ambiante, un mélange homogène des monomères acryliques et du polyol, puis on incorporait l'isocyanate polyfonctionnel audit mélange. A la phase ansi obtenue on ajoutait la diaminodiphénylsulfone en élevant modérément la température jusqu'à dissolution complète de ce produit. Au mélange ainsi réalisé on incorporait alors une solution obtenue préalablement en dissolvant le complexe BF3.MEA, puis le photo-initiateur (dérivé de benzophénone ou de benzoïne) et, si utilisé, le photo-sensibilisateur (tributylphosphate) dans la résine époxyde portée à 60° C.

Pour chacune des formulations 14.1 à 14.3, on déterminait le temps de gel en pot ainsi que le temps de gel sur stérigmes en verre de la formulation étudiée soumise à une irradiation UV.

. <u>Temps de gel en pot</u> :

On plaçait 2 cm$^3$ de la formulation dans un tube calibré en verre ayant 1,5 cm de diamètre et soumettait ledit tube à l'action d'un rayonnement UV émis par une lampe à vapeur de mercure ayant une puissance égale à 450 W, l'axe du tube étant parallèle à celui de la lampe et distant de 5 cm de ce dernier. Le temps au bout duquel la formulation adhésive soumise à l'irradiation UV ne s'écoule plus en retournant le tube représente le "temps de gel en pot".

. <u>Temps de gel sur stérigmes en verre</u> :

On formait des assemblages en collant longitudinalement l'un sur l'autre, deux stérigmes en verre ayant chacun une longueur de 10,5 cm, une largeur de 2,5 cm et une épaisseur de 1,5 mm, à l'aide de la formulation étudiée en réalisant une surface d'encollage de 1,5 cm x 2,5 cm. Les assemblages ainsi produits étaient soumis également à l'action du rayonnement UV émis par la lampe utilisée pour l'opération de détermination du "temps de gel en pot", la distance de l'axe de la lampe au plan des faces des stérigmes assemblés étant égale à 5 cm.

Le temps au bout duquel il ne devenait plus possible de séparer les stérigmes sans les casser représentait le "temps de gel sur stérigmes en verre".

Les résultats obtenus sont donnés dans le tableau XVI sous la forme de valeurs moyennes sur dix essais.

TABLEAU XVI

| Formulation | Stabilité à température ambiante et à l'obscurité | Temps de gel en pot (minutes) | Temps de gel sur stérigmes en verre (minutes) |
|---|---|---|---|
| 14.1 | plusieurs mois | > 120 | - |
| 14.2 | plusieurs mois | 10 | 5 |
| 14.3 | plusieurs mois | 5 | 1-2 |

Des assemblages de stérigmes en verre réalisés comme indiqué ci-dessus en utilisant la formulation adhésive 14.2 étaient ensuite soumis à l'essai de traction cisaillement après des durées variables d'irradiation. Après 30 secondes d'irradiation, les stérigmes se décollaient facilement l'un de l'autre. Après 60 secondes d'irradiation, la force nécessaire pour séparer les stérigmes était supérieure à celle correspondant à une séparation manuelle. Enfin, après 180 secondes d'irradiation il n'était plus possible de séparer les stérigmes sans les casser, ce qui correspond à une résistance au cisaillement du joint adhésif durci supérieure à la force de rupture des stérigmes en verre.

En utilisant la formulation adhésive 14.2 et en opérant comme indiqué dans l'exemple 1, avec toutefois enduction d'une face d'un seul stérigme par la formulation adhésive, on formait des assemblages de type 1 à partir de stérigmes en acier et soumettait lesdits assemblages à l'action de divers traitements thermiques. Les assemblages traités thermiquement étaient ensuite soumis à l'essai de traction cisaillement.

Les valeurs moyennes de la résistance au cisaillement du joint adhésif, déterminées sur dix assemblages, sont données dans le tableau XVII.

TABLEAU XVII

| Traitement thermique | Résistance au cisaillement (MPa) |
|---|---|
| 1 h à 80° C | 12 |
| 1 h à 150° C | 14 |
| 1 h à 220° C | 16 |

## Revendications

1 - Formulation adhésive acrylique présentant après durcissement une tenue thermique ainsi que des résistances au choc et au cisaillement substantiellement améliorées, ladite formulation comportant une phase monomère, qui renferme un ou plusieurs monomères monoacryliques et peut inclure jusqu'à 10%, en poids de ladite phase, d'un ou plusieurs esters pluriacryliques, un système générateur de radicaux libres ainsi qu'un adjuvant d'amélioration de la résistance au choc de la formulation adhésive durcie et une résine époxyde, et se caractérisant en ce que ledit adjuvant consiste en un réseau polyuréthanne réticulé formé in situ au sein de la phase acrylique monomère à partir d'un système précurseur de polyuréthanne mis en solution dans au moins une partie de ladite phase monomère, ledit système précurseur étant constitué d'un ou plusieurs isocyanates organiques polyfonctionnels et d'un ou plusieurs polyols, qui sont solubles chacun dans la phase acrylique monomère et sont choisis de telle sorte que ce système précurseur renferme au moins un isocyanate possédant au moins trois fonctions isocyanates ou/et un polyol ayant au moins trois fonctions hydroxyles pour conduire au polyuréthanne réticulé sans séparation de phases, en ce que la formulation renferme en outre un durcisseur latent pour la résine époxyde et en ce que les pourcentages pondéraux x de la phase monomère, y du système précurseur de polyuréthanne et z de résine époxyde dans l'ensemble de ces trois composantes sont tels que $15 \leqslant x \leqslant 94,9$, $0,1 \leqslant y \leqslant 60$ et $5 \leqslant z \leqslant 90$ avec $x + y + z = 100$ %.

2 - Formulation adhésive selon la revendication 1, caractérisée en ce que les valeurs de x, y et z sont choisies de telle sorte que $30 \leqslant x \leqslant 89$, $1 \leqslant y \leqslant 30$ et $10 \leqslant z \leqslant 70$ avec $x + y + z = 100$ %.

3 - Formulation adhésive selon la revendication 1 ou 2, caractérisée en ce que les polyols entrant dans la composition du système précurseur de polyuréthanne ont des masses moléculaires moyennes en nombre comprises entre 60 et 200 000.

4 - Formulation adhésive selon l'une des revendications 1 à 3, caractérisée en ce que les isocyanates polyfonctionnels associés au polyols pour constituer le système précurseur de polyuréthanne sont choisis parmi les isocyanates organiques possédant au moins deux groupements isocyanates dans la molécule et ayant une masse moléculaire en nombre inférieure à 5000, lesdits isocyanates étant en particulier du type aliphatique acyclique ou cyclique ou du type aromatique.

5 - Formulation adhésive selon l'une des revendications 1 à 4, caractérisée en ce que le système précurseur de polyuréthanne est formé en associant un ou plusieurs isocyanates organiques consistant en partie ou en totalité en un ou plusieurs isocyanates renfermant au moins trois fonctions isocyanates à un ou

22

plusieurs diols ou à un mélange d'un ou plusieurs diols et d'un ou plusieurs polyols renfermant au moins trois fonctions hydroxyles, la quantité du ou desdits polyols au moins trifonctionnels représentant au plus 60% et de préférence entre 0,5 et 15% du poids global du ou des diols du mélange.

6 - Formulation adhésive selon l'une des revendications 1 à 4, caractérisée en ce que le système précurseur de polyuréthanne est formé en associant un ou plusieurs diisocyanates à un mélange d'un ou plusieurs diols et d'un ou plusieurs polyols renfermant au moins trois fonctions hydroxyles, la quantité globale du ou desdits polyols au moins trifonctionnels représentant au plus 60% et de préférence entre 0,5 et 15% du poids global du ou des diols du mélange.

7 - Formulation adhésive selon la revendication 5 ou 6, caractérisée en ce que les diols présents dans le système précurseur de polyuréthanne sont choisis parmis les polyétherdiols et les polyesterdiols ayant des masses moléculaires moyennes en nombre comprises entre 100 et 200 000 et de préférence entre 200 et 50 000.

8 - Formulation adhésive selon l'une des revendications 1 à 7, caractérisée en ce que le système précurseur de polyuréthanne renferme un catalyseur de la réaction de formation de polyuréthanne, ledit catalyseur étant en particulier choisi parmi les composés organiques métalliques ayant un caractère d'acide de Lewis et notamment parmi les composés organiques de l'étain.

9 - Formulation adhésive selon la revendication 8, caractérisée en ce que le catalyseur du système précurseur de polyuréthanne est utilisé en quantité allant de 0,1 à 5 % et de préférence de 0,5 à 3 % du poids global du ou des polyols et du ou des isocyanates polyfonctionnels dudit système précurseur.

10 - Formulation adhésive selon l'une des revendications 1 à 9, caractérisée en ce que la résine époxyde présente dans la formulation consiste en une ou plusieurs résines époxydes qui renferment au moins deux groupements époxydes dans leur molécule.

11 - Formulation adhésive selon la revendication 10, caractérisée en ce que la ou les résines époxydes sont choisies parmi le diglycidyléther du bis(hydroxy-4 phényl)-2,2 propane, le diglycidyléther du bis-(hydroxy-4 phényl)méthane, le diglycidyléther du bis(hydroxy-4 phényl)-2,2 propane tétrabromé, le triglycidyléther du trihydroxyphénylméthane, le triglycidyléther du paraaminophénol, le tétraglycidyléther de la méthylènedianiline, le tétraglycidyléther du tétraphényloléthane, les polyglycidyléthers de résines phénol/formol, les polyglycidyléthers de résines crésol/formol, les résines polyépoxydées du type époxyhydantoines, époxycyanurates, polyoxypropylènes époxydés, phtalates de glycidyle et résines époxydes cycloaliphatiques.

12 - Formulation adhésive selon l'une des revendications 1 à 11, caractérisée en ce que le durcisseur latent de la résine époxyde est choisi parmi les diamines aromatiques, notamment les bis-(aminophénylsulfones), et le dicyandiamide, la quantité dudit durcisseur représentant, en particulier, 1 à 30 % et de préférence 5 à 15 % du poids de la résine époxyde, ce durcisseur étant éventuellement utilisé en association avec un catalyseur choisi parmi les acides de Lewis et leurs complexes avec notamment des amines, des éthers ou encore des alcools.

13 - Formulation adhésive selon l'une des revendications 1 à 11, caractérisée en ce que le durcisseur de la résine époxyde est un composé du type acide de Lewis, ledit composé étant utilisé en quantité allant de 0,5 à 10 % et de préférence de 1 à 6 % en poids de la résine époxyde.

14 - Formulation adhésive selon l'une des revendications 1 à 13, caractérisée en ce que la phase acrylique monomère renferme jusqu'à 10% et de préférence entre 0,5 et 5%, en poids de ladite phase, d'un ou plusieurs esters pluriacryliques.

15 - Formulation adhésive selon l'une des revendications 1 à 14, caractérisée en ce que la phase monomère renferme, outre les monomères acryliques, un ou plusieurs monomères insaturés non acryliques polymérisables par voie radicalaire et exempts de groupements carboxyliques libres, la proportion de ces monomères non acryliques n'excédant pas 20 % du poids global de la phase monomère.

16 - Formulation adhésive selon l'une des revendications 1 à 15, caractérisée en ce qu'elle renferme également un ou plusieurs additifs choisis parmi les promoteurs d'adhésion, les plastifiants, les accélérateurs de polymérisation, les oligomères réactifs du type uréthanne/(méth)acrylate ou polyester/(méth)acrylate, les colorants, les pigments, les charges, les agents mouillants, les agents épaississants minéraux et notamment silice finement divisée ou polymériques et notamment polymères acryliques tels que polyméthacrylates d'alcoyle, et les agents stabilisants.

17 - Formulation adhésive selon l'une des revendications 1 à 16, caractérisée en ce qu'une fraction des monomères formant la phase monomère est constituée d'un ou plusieurs acides insaturés monocarboxyliques ou polycarboxyliques polymérisables par voie radicalaire, en particulier acide acrylique et/ou acide méthacrylique, jouant, entre autres, le rôle de promoteurs d'adhésion, ladite fraction représentant avantageusement environ 1 à 80 % et de préférence 5 à 50 % du poids de la phase monomère.

18 - Formulation adhésive selon l'une des revendications 1 à 17, caractérisée en ce que le système générateur de radicaux libres, présent dans la formulation, consiste en un photoinitiateur, éventuellement associé à un photosensibilisateur, ledit système fournissant des radicaux libres sous l'action d'un rayonnement ultra-violet.

19 - Formulation adhésive selon l'une des revendications 1 à 17, caractérisée en ce que le générateur de radicaux libres est un composé peroxydé ou un composé du type azobisnitrile, qui fournit des radicaux libres par activation thermique.

20 - Formulation adhésive selon la revendications 18 ou 19, caractérisée en ce que la quantité de générateur de radicaux libres représente de 0,1 à 5 % et de préférence de 0,2 à 4 % du poids des monomères insaturés à polymériser.

21 - Formulation adhésive selon l'une des revendications 18 à 20, caractérisée en ce qu'elle se présente sous la forme monocomposante, c'est-à-dire sous la forme d'un mélange intime de tous les ingrédients entrant dans sa composition.

22 - Formulation adhésive selon l'une des revendications 1 à 17, caractérisée en ce que la système générateur de radicaux libres résulte de l'association d'un composé peroxydé avec un composé activateur et en ce que la formulation se présente sous la forme bicomposante, l'une des composantes de la formulation renfermant tout ou partie des monomères polymérisables par voie radicalaire ainsi que le système précurseur de polyuréthanne et l'un des constituants, à savoir composé peroxydé ou composé activateur, du système générateur de radicaux libres, tandis que l'autre composante de la formulation renferme l'autre constituant du système générateur de radicaux libres, la résine époxyde et, si elle existe, la partie des monomères polymérisables par voie radicalaire non incorporée dans la composante précédente, le durcisseur latent pour la résine époxyde ainsi que les autres additifs éventuels étant présents dans celle des deux composantes dont ils ne sont pas susceptibles de perturber la stabilité au stockage et/ou la stabilité au cours des manipulations.

23 - Formulation selon les revendications 17 et 22, caractérisée en ce que la composante renfermant le système précurseur de polyuréthanne est exempte de monomères polymérisables par voie radicalaire porteurs de groupements carboxyliques libres et renferme le composé activateur du système générateur de radicaux libres, tandis que la composante renfermant la résine époxyde contient également le composé peroxydé du système générateur de radicaux libres ainsi que la totalité des monomères polymérisables par voie radicalaire et porteurs de groupements carboxyliques libres.

24 - Formulation adhésive selon l'une des revendications 1 à 17, caractérisée en ce que le système générateur de radicaux libres résulte de l'association d'un composé peroxydé avec un composé activateur et en ce que la formulation se présente sous la forme bicomposante, l'une des composantes de la formulation renfermant tous les ingrédients de ladite formulation à l'exception du composé activateur, tandis que l'autre composante renferme seulement ledit composé activateur.

25 - Formulation adhésive selon l'une des revendications 22 à 24, caractérisée en ce que la quantité de composé peroxydé ainsi que la quantité de composé activateur représentent chacune de 0,1 à 5 % et de préférence de 0,2 à 4 % du poids des monomères insaturés à polymériser.

26 - Application de la formulation adhésive selon l'une des revendications 1 à 25, à la liaison d'éléments et notamment d'éléments structuraux.

27 - Application selon la revendication 26, caractérisée en ce que les éléments, dont la liaison est assurée à l'aide de la formulation adhésive, sont en matériaux tels que métaux, matières platiques, matériaux composites, bois, verre et céramiques.

28 - Application selon la revendication 27, caractérisée en ce que les éléments, dont la liaison est assurée à l'aide de la formulation adhésive, sont des tôles métalliques ayant subi ou non un dégraissage.

Office européen
des brevets

RAPPORT DE RECHERCHE EUROPEENNE

Numero de la demande

EP 88 40 3260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 154 819 (TAKEDA CHEMICAL INDUSTRIES) <br> * Revendication 1; exemple 4 * <br> ----- | 1 | C 09 J 3/16 <br> C 08 F 283/00 |
| | | | **DOMAINES TECHNIQUES RECHERCHES (Int. Cl.4)** |
| | | | C 09 J <br> C 08 L <br> C 08 F <br> C 08 G |

Le présent rapport a été établi pour toutes les revendications

| Lieu de la recherche | Date d'achèvement de la recherche | Examinateur |
|---|---|---|
| LA HAYE | 15-03-1989 | SCHUELER D.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)